# DEMANDE DE BREVET EUROPEEN

(11) **EP 1 988 006 A1**
(43) Date de publication de la demande: **05.11.2008**
(21) Numéro de dépôt: 08290408.7
(22) Date de dépôt: 29.04.2008
(51) Int. Cl.: B62D 65/16, B62D 65/18

(54) **Agencement pour le montage d'un élément de carrosserie sur un élément de structure de caisse**

(30) Priorité: 03.05.2007 FR 0703168
(71) Demandeur: Bret CLB, 94130 Nogent-sur-Marne (FR)
(72) Inventeur: Belloche, Daniel Vital Jean, 94500 Champigny sur Marne (FR)
(74) Mandataire: Kohn, Philippe

(57) **Abrégé**

L'invention propose un agencement (10) pour le montage d'un élément (12) de carrosserie, sur un élément (14) de structure de caisse associé de véhicule automobile (16), comportant une structure (24) provisoire de montage (24), positionnable sur l'élément (14) de structure de caisse par l'intermédiaire de premiers moyens et verrouillable sur cet élément (14) caisse par l'intermédiaire de deuxièmes moyens, caractérisé en ce que la structure (24) de montage du dispositif (22) porte un ensemble (32) pneumatique autonome comportant un réservoir (34), un distributeur (36), et au moins un vérin pneumatique (38) qui est susceptible de mouvoir les deuxièmes moyens (28).

## Description

L'invention concerne un agencement pour le montage d'un élément de carrosserie sur un élément de structure de caisse de véhicule automobile associé.

L'invention concerne plus particulièrement un agencement pour le montage d'un élément de carrosserie, sur un élément de structure de caisse de véhicule automobile associé.

L'agencement comprend un dispositif de montage comportant des moyens de positionnement de chaque élément de carrosserie par rapport à chaque élément de structure de caisse dans une position déterminée, dite de ferrage.

Cette position est définie géométriquement dans un trièdre de référence formé par l'axe longitudinal, l'axe transversal et l'axe vertical de l'élément de structure de caisse, de manière à ferrer l'élément de carrosserie, ainsi positionné, sur l'élément de structure de caisse du véhicule.

Les moyens de positionnement de l'élément de carrosserie sont constitués d'une structure provisoire de montage qui comporte :
- des premiers moyens pour mettre en position, selon un premier référentiel donné, la structure de montage par rapport à l'élément de structure de caisse dans une position d'utilisation dans laquelle la structure de montage est solidaire de l'élément de structure de caisse, les premiers moyens étant destinés à coopérer temporairement avec l'élément de structure de caisse de manière à positionner la structure de montage par rapport à l'élément de structure de caisse selon deux premiers des trois axes du premier référentiel, tels que l'axe longitudinal et l'axe vertical, qui déterminent la position d'utilisation de la structure de montage par rapport au trièdre de référence de l'élément de structure de caisse ,
- des deuxièmes moyens pour verrouiller la structure de montage par rapport à l'élément de structure de caisse dans sa position d'utilisation, qui sont montés mobiles entre une position de repos et une position de verrouillage dans laquelle ils immobilisent et positionnent la structure de montage par rapport à l'élément de structure de caisse selon le dernier des trois axes dudit premier référentiel,
- des troisièmes moyens qui coopèrent avec des moyens complémentaires de l'élément de carrosserie pour positionner, selon un second référentiel donné, l'élément de carrosserie à ferrer dans sa position théorique de ferrage par rapport à l'ensemble formé de la structure de montage fixé sur l'élément de structure de caisse.

On connaît de nombreux exemples d'agencements de ce type.

Ces agencements comportent généralement des dispositifs de montage qui sont mis en oeuvre à différents postes d'une chaîne de montage destinée à la fabrication du véhicule afin d'assembler un élément de carrosserie particulier sur un élément de structure de caisse du véhicule.

Par exemple, de tels dispositifs permettent de réaliser le montage de diverses pièces sur la caisse d'un véhicule, tels que des supports, des éléments de carrosserie ou des ouvrants.

Conventionnellement, on utilise des dispositifs automatisés comportant notamment des outils très complexes comme des bras robotisés et/ou automatisés qui sont montés de manière mobile pour effectuer des montages répétitifs "au défilé", c'est-à-dire qu'ils sont susceptibles de se déplacer le long de la chaîne de montage en même temps que la caisse.

De tels dispositifs de montage sont, par exemple, capables de prélever une pièce grâce à des moyens de préhension du type à ventouses et/ou à serrage à partir d'un poste de stockage et de venir positionner cette pièce par rapport à la caisse dans une position géométrique déterminée définie par rapport à la caisse afin de fixer la pièce sur la caisse.

Dans le cas du montage d'une pièce telle qu'un support d'élément de carrosserie, on procède d'abord à son positionnement par rapport à la caisse, puis on procède à sa fixation sur la caisse par l'intermédiaire de moyens de fixation conventionnels appropriés.

Dans le cas d'une pièce de support pour un élément de carrosserie, il est impératif de maîtriser avec précision et de manière répétitive le bon positionnement de la pièce à fixer sur la caisse puisque cela détermine en outre le positionnement de l'élément de carrosserie qui sera monté ultérieurement.

Ainsi, la précision dans le positionnement et la fixation de la pièce de support permet de garantir l'obtention d'une bonne qualité d'assemblage des éléments.

En particulier, cette précision permet de garantir leur positionnement en affleurement les uns par rapport aux autres dans le cas d'un élément de carrosserie tel qu'une aile latérale ou encore un capot moteur.

Or, ces dispositifs de montage conventionnels, d'étude et de conception complexes, nécessitent de nombreux asservissements qui requièrent un temps de mise au point important sur la chaîne de montage.

De plus, bien qu'ayant une autonomie de fonctionnement théoriquement non limitée, de tels dispositifs demandent des opérations de maintenance régulières qui provoquent alors des arrêts du poste, voire de la chaîne de montage, lesquels sont préjudiciables en terme de productivité et sont donc particulièrement coûteux.

Pour remédier à cet inconvénient, on a proposé des dispositifs du type décrit précédemment. Il s'agit par exemple, pour le montage d'un ouvrant sur une ouverture d'une caisse de véhicule automobile, d'un cadre comportant des deuxièmes moyens conformés sous forme de pinces dont les mors sont destinés à serrer une feuillure délimitant l'entourage de l'ouverture de la caisse sur laquelle doit être monté l'ouvrant considéré.

Une fois le cadre mis en position, l'ouvrant est pré-positionné sur le cadre avant son ferrage.

De tels cadres sont particulièrement avantageux, notamment parce qu'ils sont légers et donc parce qu'ils peuvent être aisément manipulés par un opérateur.

Toutefois, le mécanisme d'actionnement des deuxièmes moyens, c'est-à-dire en ce cas des pinces, est généralement actionné manuellement par l'opérateur en charge du montage.

Ainsi, dans le cas précité, l'opérateur doit actionner manuellement au moins deux poignées reliées à des câbles qui, à leur tour, actionnent chacun un mors d'une des pinces.

En même temps, l'opérateur doit maintenir le cadre, pré-positionné par l'intermédiaire des premiers moyens, dans l'ouverture de la caisse.

Cette manoeuvre est malaisée et exige un effort de traction important sur lesdites poignées. Cet effort est d'autant plus pénible et non fiable qu'il est effectué de manière répétitive lors du montage d'un ouvrant sur chaque caisse défilant devant l'opérateur.

Pour remédier à ces inconvénients, l'invention propose un agencement du type décrit précédemment, comportant un dispositif de montage dont les deuxièmes moyens sont actionnés pneumatiquement.

Dans ce but, l'invention propose un agencement du type décrit précédemment, caractérisé en ce que la structure de montage du dispositif porte un ensemble pneumatique autonome comportant un réservoir, un distributeur, et au moins un vérin pneumatique qui est susceptible de mouvoir les deuxièmes moyens de leur position de repos à leur position de verrouillage et réciproquement.

Selon d'autres caractéristiques de l'invention :
- l'agencement est associé au montage d'un ouvrant, formant l'élément de carrosserie dans une ouverture de la caisse du véhicule entourant l'ouvrant, formant l'élément de structure de caisse, et la structure de montage du dispositif comporte un cadre, qui est destiné à être mis en position par l'intermédiaire des premiers moyens, puis verrouillé par l'intermédiaire des deuxièmes moyens, dans l'ouverture de la caisse dont le pourtour comporte au moins un premier élément complémentaire des premiers moyens et au moins un second élément complémentaire des seconds moyens,
- les deuxièmes moyens du dispositif comportent au moins une pince portée par le cadre, qui est destinée à serrer une feuillure formant le second élément qui est agencée suivant le pourtour de l'ouverture de l'ouvrant et qui s'étend dans un plan déterminé par les axes longitudinaux et vertical du premier référentiel, ladite pince comportant au moins deux mors destinés à être serrés suivant la direction de l'axe transversal du premier référentiel, et au moins un de ces mors étant actionné par le vérin pneumatique,
- le cadre du dispositif comporte au moins trois pinces, agencées sensiblement aux sommets d'un triangle d'aire maximale inscrit dans l'ouverture de la porte, dont au moins un mors de chacune est liée en pivotement à l'extrémité d'une tige d'un vérin pneumatique associé de l'ensemble pneumatique,
- l'ensemble pneumatique du dispositif comporte un réservoir unique et un distributeur unique alimentant simultanément tous les vérins du cadre,
- l'agencement comporte une potence de stockage, agencée à proximité d'un poste de ferrage placé sur une chaîne d'assemblage voyant défiler des caisses de véhicule à ferrer, dont un bras horizontal comporte une rampe munie de moyens d'accrochage de la structure de montage qui sont mobiles le long de la rampe entre une position de stockage de la structure de montage, agencée en retrait de la chaîne d'assemblage, et une positon de préhension de la structure de montage, agencée à proximité de la chaîne d'assemblage.
- la potence de stockage comporte des moyens d'accoupiement automatique à une source d'air sous pression avec le réservoir du cadre du dispositif, pour permettre une recharge dudit réservoir dans la position de stockage du dispositif,
- la source d'air de la potence est soumise à une pression d'environ 6 bars, pour permettre au réservoir du cadre de fournir aux vérins du cadre une pression d'utilisation d'environ 4 à 6 bars, leur permettant d'exercer sur les mors des pinces un effort de serrage d'environ 10 daN,
- les premiers moyens du cadre du dispositif comportent au moins un pion orienté suivant la direction transversale qui est reçu dans un perçage du pourtour de l'ouverture de la caisse, formant le premier élément,
- les premiers moyens du cadre du dispositif comportent au moins une patte qui est agencée dans un plan déterminée par les axes longitudinal et vertical et qui est destinée à être reçue en butée suivant la direction transversale contre une partie de la feuillure et/ou de la caisse, formant le second élément,
- la structure est réalisée en un matériau léger et résistant, tel que de l'aluminium et/ou un matériau composite à base de fibres de carbone.

D'autres caractéristiques et avantages de l'invention apparaîtront à la lecture de la description détaillée qui suit pour la compréhension de laquelle on se reportera aux figures annexées parmi lesquelles :
- la figure 1 est une vue de côté illustrant un dispositif de montage mis en place dans une ouverture d'une caisse d'un véhicule automobile préalablement au montage de l'ouvrant associé ;
- la figure 2 est une vue schématique représentant l'implantation d'un agencement selon l'invention le long d'une chaîne de ferrage d'ouvrants de véhicules automobiles ;
- la figure 3 est un schéma de principe illustrant le fonctionnement du réservoir, du distributeur, et des vérins pneumatiques qui sont susceptibles de mouvoir les deuxièmes moyens du dispositif de montage ;

Dans la description et les revendications qui suivent, on utilisera à titre non limitatif les expressions telles que orientations « longitudinale », « transversale » et « verticale » en référence au trièdre (X, Y, Z) représenté aux figures et aux définitions données dans la description.

De plus, les éléments identiques, similaires ou analogues de l'invention seront désignés par les mêmes chiffres de référence.

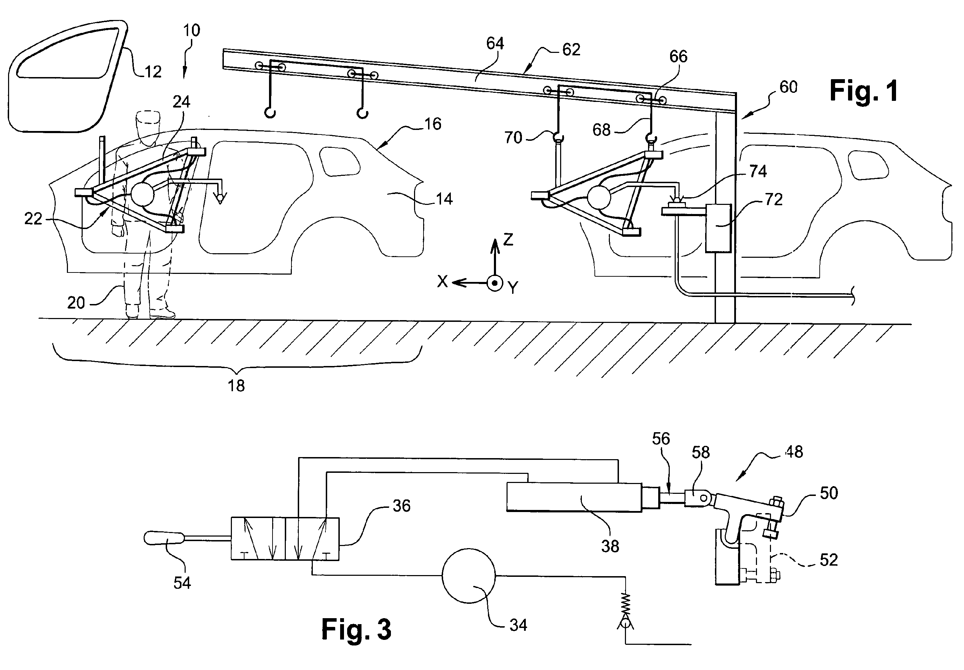

On a représenté à la figure 1 un agencement 10 pour le montage d'un élément 12 de carrosserie, sur un élément 14 de structure de caisse associé d'un véhicule automobile 16.

Le véhicule automobile 16 a été représenté ici en cours de fabrication sur une chaîne de montage, qui voit défiler une pluralité de véhicules 16 identiques devant un poste 18 dit de ferrage, occupé par un opérateur 20.

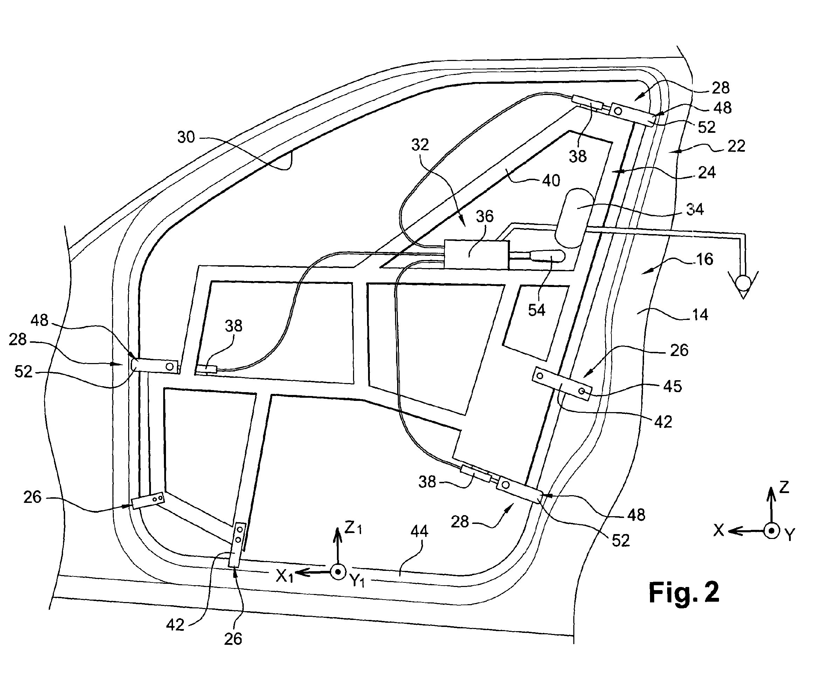

De manière connue, comme l'illustre plus particulièrement la figure 2, l'agencement 10 comporte un dispositif 22 de montage comportant des moyens de positionnement de chaque élément (non représenté) de carrosserie par rapport à chaque élément 14 de structure de caisse dans une position déterminée, dite de ferrage, qui est définie géométriquement dans un trièdre "X,Y,Z" de référence formé par l'axe longitudinal "X", l'axe transversal "Y" et l'axe vertical "Z" de l'élément de structure de caisse, de manière à ferrer l'élément de carrosserie, ainsi positionné, sur l'élément 14 de structure de caisse du véhicule, lesdits moyens de positionnement de l'élément de carrosserie étant constitués d'une structure provisoire de montage 24 comportant :
- des premiers moyens 26 pour mettre en position, selon un premier référentiel "X1, Y1, Z1" donné, la structure 24 de montage par rapport à l'élément 14 de structure de caisse dans une position d'utilisation dans iaqueiie ia structure de montage 24 est solidaire de l'élément 14 de structure de caisse.
   Les premiers moyens 26 sont destinés à coopérer temporairement avec l'élément 14 de structure de caisse de manière à positionner la structure 24 de montage par rapport à l'élément 14 de structure de caisse selon deux premiers axes "X1, Z1" des trois axes "X1, Y1, Z1" du premier référentiel, tels que l'axe longitudinal "X1" et l'axe vertical "Z1", qui déterminent la position d'utilisation de la structure de montage 24 par rapport au trièdre "X, Y, Z" de référence de l'élément 14 de structure de caisse,
- des deuxièmes moyens 28 pour verrouiller la structure de montage 24 par rapport à l'élément 14 de structure de caisse dans sa position d'utilisation.
   Les deuxièmes moyens 28 sont montés mobiles entre une position de repos et une position de verrouillage dans laquelle ils immobilisent et positionnent la structure 24 de montage par rapport à l'élément 14 de structure de caisse selon le dernier axe "Y1" des trois axes "X1, Y1, Z1" dudit premier référentiel,
- des troisièmes moyens (non représentés) qui coopèrent avec des moyens complémentaires de l'élément 12 de carrosserie pour positionner, selon un second référentiel "X2, Y2, Z2" donné, l'élément 12 de carrosserie dans sa position de ferrage par rapport à l'ensemble formé de la structure 24 de montage et de l'élément 14 de structure de caisse.

Dans le cas qui a été illustré à la figure 2, l'agencement 10 décrit ci-dessus est plus particulièrement associé au montage d'un ouvrant 12, formant l'élément 12 de carrosserie, dans une ouverture 30 de la caisse 14 du véhicule entourant l'ouvrant, formant l'élément 14 de structure de caisse.

Il sera compris que cette configuration ne saurait être limitative de l'invention, et que celle-ci trouve à s'appliquer à n'importe quelle configuration de montage d'un élément 12 de carrosserie, par exemple un bouclier, une aile, ou un pavillon sur un élément 14 de structure de caisse, qu'il s'agisse d'une caisse entière de véhicule automobile ou seulement d'une partie de ladite caisse.

Conformément à l'invention, la structure 24 de montage du dispositif porte un ensemble 32 pneumatique autonome comportant un réservoir 34, un distributeur 36, et au moins un vérin 38 pneumatique qui est susceptible de mouvoir les deuxièmes moyens 28 de leur position de repos à leur position de verrouillage et réciproquement. Cette configuration permet à l'opérateur en charge de l'assemblage de l'élément 12 de carrosserie de pouvoir immobiliser celui-ci à l'aide des deuxièmes moyens 28 d'une manière simple, sans effort, et centralisée par la commande du seul distributeur 26. De plus, cette configuration garantit une répétitivité satisfaisante de la mise en oeuvre des deuxièmes moyens 28.

On comprendra aisément l'avantage de cette conception par rapport aux conceptions connues de l'état de la technique selon lesquelles l'opérateur devait actionner manuellement au moins deux poignées reliées à des câbles actionnant chacun un des deuxièmes moyens, en même temps qu'il devait maintenir la structure de montage 24 par rapport à l'élément 14 de structure de caisse.

Dans l'exemple qui a été décrit ici en référence à la figure 2, la structure 24 de montage du dispositif comporte un cadre 40, qui est destiné à être mis en position par l'intermédiaire des premiers moyens 26, puis verrouillé par l'intermédiaire des deuxièmes moyens 28, dans l'ouverture 30 de la caisse 16. Le pourtour de l'ouverture 30 de la caisse 16 comporte au moins un premier élément complémentaire des premiers moyens 26 et au moins un second élément 44 complémentaire des seconds moyens 28.

Avantageusement, le cadre 40 de la structure 24 est réalisée en un matériau léger et résistant, tel que de l'aluminium et/ou un matériau composite à base de fibres de carbone, ceci afin de permettre sa préhension et son transport de manière aisée par l'opérateur en charge du montage de l'ouvrant 12.

Plusieurs modes de réalisation peuvent être envisagés pour la réalisation des premiers moyens 26 sans être pour autant limitatifs de l'invention.

Par exemple, les premiers moyens 26 du cadre 40 du dispositif 24 peuvent comporter au moins un pion 45 porté par une patte 42 s'étendant à partir du cadre 40. Le pion 45 est orienté suivant la direction transversale "Y1" et est reçu dans un perçage (non représenté) du pourtour de l'ouverture 30 de la caisse 16.

Les premiers moyens 26 peuvent aussi simplement comporter au moins une patte 42 qui est agencée dans un plan déterminée par les axes longitudinal "X1" et vertical "Z1" et qui est destinée à être reçue en butée suivant la direction transversale contre une partie d'une feuillure 44 de l'ouverture 30 et/ou de la caisse 16.

Dans le mode de réalisation préféré de l'invention, les deuxièmes moyens 28 du dispositif comportent au moins une pince 48 portée par le cadre, qui est destinée à serrer une feuillure 44 formant le second élément qui est agencée suivant le pourtour de l'ouverture 30 de l'ouvrant et qui s'étend dans un plan déterminé par les axes longitudinaux "X1" et vertical "Z1" du premier référentiel.

La pince 48 comporte au moins deux mors 50, 52 qui sont destinés à être serrés suivant la direction de l'axe transversal "Y1" du premier référentiel, au moins un de ces mors 50, 52 étant actionné par le vérin pneumatique 38.

Le détail de la commande du vérin pneumatique 38 de son actionnement a été décrit à la figure 3. Comme on peut le voir, l'agencement 10 comporte un réservoir 34 alimentant un distributeur 36 qui peut être commandé par une poignée 54. Ce distributeur alimente au moins un vérin 38 pneumatique et peut en commander l'actionnement, le maintient ou la relâche. Une extrémité 58 d'une tige 56 de chaque vérin 38 est liée en pivotement à l'extrémité d'un des deux mors 50 d'une pince 48 dont l'autre mors 52 est fixe, pour commander sélectivement l'ouverture ou la fermeture des mors 50, 52.

Dans le mode de réalisation préféré de l'invention, le cadre 40 du dispositif 22 comporte au moins trois pinces 48, agencées sensiblement aux sommets d'un triangle d'aire maximale inscrit dans l'ouverture 30 de la porte. Cette configuration garantit un centrage optimal du cadre 40 dans l'ouverture 30 de la porte.

Il sera compris que de préférence, l'ensemble 32 pneumatique du dispositif 22 comporte un réservoir 34 unique et un distributeur unique 36 alimentant simultanément tous les vérins 38 du cadre 40.

L'invention trouve particulièrement à s'appliquer, comme on l'a vu, dans le cadre d'une chaîne de montage de véhicules automobiles.

A cet effet, comme l'illustre la figure 1, l'agencement 10 une potence 60 de stockage, agencée à proximité du poste 18 de ferrage placé sur une chaîne d'assemblage voyant défiler des caisses 16 de véhicule à ferrer. Un bras horizontal 62 de la potence 60 comporte une rampe 64 munie de moyens d'accrochage de la structure de montage 24 qui sont mobiles le long de la rampe 64.

Ces moyens d'accrochage sont mobiles le long de la rampe 64 entre une position de stockage de la structure de montage 24, représentée en traits forts, qui est agencée en retrait de la chaîne d'assemblage, et une positon de préhension de la structure de montage 24, représentée en traits pointillés, qui est agencée à proximité de la chaîne d'assemblage.

Par exemple, la rampe 64 est conformée en rail et ce rail reçoit deux chariots 66 à partir desquels s'étendent des bras inférieurs 68 dont les extrémités comportent des crochets 70 d'accrochage du cadre 40.

Le réservoir 34 pourrait être constitué d'une bouteille autonome d'air sous pression à usage unique (non représentée) ou rechargeable indépendamment, et équipée d'un détendeur, de préférence amovible à l'aide de moyens de connexion rapide.

Toutefois, avantageusement, la potence 60 de stockage comporte des moyens d'accouplement automatique à une source d'air 72 sous pression avec le réservoir 34 du cadre 40 du dispositif 22, pour permettre une recharge dudit réservoir 34 dans la position de stockage du dispositif 22. Ces moyens comportent par exemple une buse 74 munie d'un clapet anti-retour.

A titre indicatif, pour la bonne mise en oeuvre de l'invention, la source d'air 72 de la potence 60 est soumise à une pression d'environ 6 bars, pour permettre au réservoir 34 du cadre 40 de fournir aux vérins 38 du cadre 40 une pression d'utilisation d'environ 4 à 6 bars, leur permettant d'exercer sur les mors 50, 52 des pinces 38 un effort de serrage d'environ 10 daN.

L'invention permet donc d'alléger considérablement les opérations de ferrage, notamment sur une chaîne d'assemblage d'ouvrants de véhicules automobiles, ce qui permet d'accroître considérablement les cadences de production de tels véhicules tout en accroissant les conditions de sécurité des opérateurs.

## Revendications

1. Agencement (10) pour le montage d'un élément (12) de carrosserie, sur un élément (14) de structure de caisse associé de véhicule automobile (16), comportant un dispositif (22) de montage comportant des moyens de positionnement de chaque élément de carrosserie par rapport à chaque élément (14) de structure de caisse dans une position déterminée, dite de ferrage, qui est définie géométriquement dans un trièdre (X,Y,Z) de référence formé par l'axe longitudinal (X), l'axe transversal (Y) et l'axe vertical (Z) de l'élément (14) de structure de caisse, de manière à ferrer l'élément (12) de carrosserie, ainsi positionné, sur l'élément (14) de structure de caisse du véhicule, lesdits moyens de positionnement de l'élément de carrosserie étant constitués d'une structure provisoire de montage (24) comportant:
- des premiers moyens (26) pour mettre en position, selon un premier référentiel (X1, Y1, Z1) donné, la structure (24) de montage par rapport à l'élément de structure de caisse (14) dans une position d'utilisation dans laquelle la structure (24) de montage est solidaire de l'élément (14) de structure de caisse, les premiers moyens (26) étant destinés à coopérer temporairement avec l'élément (14) de structure de caisse de manière à positionner la structure (24) de montage par rapport à l'élément (14) de structure de caisse selon deux premiers (X1, Z1) des trois axes (X1, Y1, Z1) du premier référentiel, tels que l'axe longitudinal (X1) et l'axe vertical (Z1), qui déterminent la position d'utilisation de la structure de montage (24) par rapport au trièdre (X, Y, Z) de référence de l'élément (14) de structure de caisse,
- des deuxièmes moyens (28) pour verrouiller la structure (24) de montage par rapport à l'élément (14) de structure de caisse dans sa position d'utilisation, qui sont montés mobiles entre une position de repos et une position de verrouillage dans laquelle ils immobilisent et positionnent la structure (24) de montage par rapport à l'élément (14) de structure de caisse selon le dernier (Y1) des trois axes (X1, Y1, Z1) dudit premier référentiel,
- des troisièmes moyens qui coopèrent avec des moyens complémentaires de l'élément (12) de carrosserie pour positionner, selon un second référentiel (X2, Y2, Z2) donné, l'élément (12) de carrosserie à ferrer dans sa position théorique de ferrage par rapport à l'ensemble formé de ia structure (24) de montage fixé sur l'élément (14) de structure de caisse,
**caractérisé en ce que** la structure (24) de montage du dispositif (22) porte un ensemble (32) pneumatique autonome comportant un réservoir (34), un distributeur (36), et au moins un vérin pneumatique (38) qui est susceptible de mouvoir les deuxièmes moyens (28) de leur position de repos à leur position de verrouillage et réciproquement.

2. Agencement (10) selon la revendication précédente, **caractérisé en ce qu'**il est associé au montage d'un ouvrant (12), formant l'élément de carrosserie dans une ouverture (30) de la caisse (14) du véhicule (16) entourant l'ouvrant, formant l'élément de structure de caisse, et **en ce que** la structure (24) de montage du dispositif comporte un cadre (40), qui est destiné à être mis en position par l'intermédiaire des premiers moyens (26), puis verrouillé par l'intermédiaire des deuxièmes moyens (28), dans l'ouverture (30) de la caisse (16) dont le pourtour comporte au moins un premier élément complémentaire des premiers moyens (26) et au moins un second élément complémentaire des seconds moyens (28).

3. Agencement (10) selon la revendication précédente, **caractérisé en ce que** les deuxièmes moyens (28) du dispositif (22) comportent au moins une pince (48) portée par le cadre (40), qui est destinée à serrer une feuillure (44) formant le second élément qui est agencée suivant le pourtour de l'ouverture (30) de l'ouvrant (12) et qui s'étend dans un plan déterminé par les axes longitudinaux (X1) et vertical (Z1) du premier référentiel, ladite pince (48) comportant au moins deux mors (50, 52) destinés à être serrés suivant la direction de l'axe transversal (Y1) du premier référentiel, et au moins un de ces mors (50) étant actionné par le vérin pneumatique (38).

4. Agencement (10) selon la revendication précédente, **caractérisé en ce que** le cadre (40) du dispositif (22) comporte au moins trois pinces (48), agencées sensiblement aux sommets d'un triangle d'aire maximale inscrit dans l'ouverture de l'ouvrant (12), dont au moins un mors (50) de chacune est liée en pivotement à l'extrémité (58) d'une tige (56) d'un vérin pneumatique (38) associé de l'ensemble (32) pneumatique.

5. Agencement (10) selon la revendication précédente, **caractérisé en ce que** l'ensemble (32) pneumatique du dispositif comporte un réservoir unique (34) et un distributeur unique (36) alimentant simultanément tous les vérins (38) du cadre (40).

6. Agencement (10) selon l'une quelconque des revendications 2 à 5, **caractérisé en ce qu'**il comporte une potence (60) de stockage, agencée à proximité d'un poste (18) de ferrage placé sur une chaîne d'assemblage voyant défiler des caisses (16) de véhicule à ferrer, dont un bras horizontal (62) comporte une rampe (64) munie de moyens (66, 68, 70) d'accrochage de la structure provisoire de montage (24) qui sont mobiles le long de la rampe (64) entre une position de stockage de la structure provisoire de montage (24), agencée en retrait de la chaîne d'assemblage, et une position de préhension de la structure provisoire de montage (24), agencée à proximité de la chaîne d'assemblage.

7. Agencement (10) selon la revendication précédente prise en combinaison avec la revendication 5, **caractérisé en ce que** la potence (60) de stockage comporte des moyens d'accouplement automatique à une source d'air (72) sous pression avec le réservoir (34) du cadre (40) du dispositif (22), pour permettre une recharge dudit réservoir (34) dans la position de stockage de la structure provisoire de montage (24) du dispositif (22).

8. Agencement (10) selon la revendication précédente, **caractérisé en ce que** la source d'air (72) de la potence (60) est soumise à une pression d'environ 6 bars, pour permettre au réservoir (34) du cadre (40) de fournir aux vérins (38) du cadre (40) une pression d'utilisation d'environ 4 à 6 bars, leur permettant d'exercer sur les mors (50, 52) des pinces (38) un effort de serrage d'environ 10 daN.

9. Agencement (10) selon l'une des revendications 2 à 8, **caractérisé en ce que** les premiers moyens (26) du cadre (40) du dispositif (22) comportent au moins un pion (45) orienté suivant la direction transversale (Y1) qui est reçu dans un perçage du pourtour de l'ouverture (30) de la caisse (16), formant le premier élément.

10. Agencement (10) selon l'une des revendications 3 à 9, **caractérisé en ce que** les premiers moyens (26) du cadre (40) du dispositif (22) comportent au moins une patte (42) qui est agencée dans un plan déterminée par les axes longitudinal (X1) et vertical (Z1) et qui est destinée à être reçue en butée suivant la direction transversale (Y1) contre une partie de la feuillure (44) et/ou de la caisse (16), formant le second élément.

11. Agencement (10) selon l'une quelconque des revendications précédentes, **caractérisé en ce que** la structure (24) est réalisée en un matériau léger et résistant, tel que de l'aluminium et/ou un matériau composite à base de fibres de carbone.
